(19) Europäisches Patentamt / European Patent Office / Office européen des brevets

(11) **EP 4 205 962 A1**

(12) # EUROPEAN PATENT APPLICATION
published in accordance with Art. 153(4) EPC

(43) Date of publication:
**05.07.2023 Bulletin 2023/27**

(21) Application number: **21863920.1**

(22) Date of filing: **16.06.2021**

(51) International Patent Classification (IPC):
***B32B 7/025*** (2019.01)

(52) Cooperative Patent Classification (CPC):
**B32B 7/025**

(86) International application number:
**PCT/JP2021/022877**

(87) International publication number:
**WO 2022/049861 (10.03.2022 Gazette 2022/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.09.2020 JP 2020150094**

(71) Applicant: **Resonac Corporation**
**Tokyo 105-8518 (JP)**

(72) Inventors:
 • **MITSUISHI, Naoko**
  **Tagawa-shi, Fukuoka 825-0005 (JP)**
 • **SHIMOJYO, Takao**
  **Tagawa-shi, Fukuoka 825-0005 (JP)**
 • **FUJINO, Hiroaki**
  **Tagawa-shi, Fukuoka 825-0005 (JP)**
 • **NAKANO, Shingo**
  **Tagawa-shi, Fukuoka 825-0005 (JP)**
 • **SHIOKAWA, Hirofumi**
  **Tagawa-shi, Fukuoka 825-0005 (JP)**
 • **YAMADA, Kouji**
  **Tagawa-shi, Fukuoka 825-0005 (JP)**
 • **MORIHARA, Masumi**
  **Tagawa-shi, Fukuoka 825-0005 (JP)**
 • **IWANAGA, Masahiro**
  **Tagawa-shi, Fukuoka 825-0005 (JP)**

(74) Representative: **Hoffmann Eitle**
**Patent- und Rechtsanwälte PartmbB**
**Arabellastraße 30**
**81925 München (DE)**

(54) **LAMINATED STRUCTURE AND OBJECT DETECTION STRUCTURE**

(57) A laminated structure includes a first member, a second member that faces the first member, and a filling member that is disposed between the first member and the second member, and a difference between a value of a relative permittivity of a member with a largest relative permittivity and a value of a relative permittivity of a member with a lowest relative permittivity among the first member, the second member and the filling member is 1.0 or less.

**(Cont. next page)**

EP 4 205 962 A1

# FIG. 1

**Description**

Technical Field

The present invention relates to a laminated structure and an object detection structure.

Background Art

Patent Document 1 discloses a metallic coating film in which an undercoat film and a metal film are coated on a substrate in this order and a clear coating film is coated on the metal film, and that this metallic coating film is used for automobile parts.

Citation List

Patent Document

[Patent Document 1] Japanese Patent Application Laid-Open (JP-A) No.2003-019765

SUMMARY OF INVENTION

Technical Problem

By the way, automobiles in recent years have made remarkable progress in safety devices, and for example, an automatic collision avoidance system has become common.

The automatic collision avoidance system automatically applies the brakes using image data from an on-board camera and information about the relative distance to an object from a millimeter wave radar.

It is desirable to dispose a millimeter wave radar transceiver that constitutes an automatic collision avoidance system in the front center of the automobile. An automobile emblem is generally disposed in the front center of the automobile. Therefore, it is desirable to dispose the millimeter wave radar transceiver on the rear side of the automobile emblem. For example, it can be assumed that the metallic coating film described in Patent Document 1 is used for automobile emblems.

When laminating multiple members such as automobile emblems, there are cases where gaps are formed between members in consideration of variations in the plate thickness of each member. However, there is a risk that reflection of waves will occur and the transmission attenuation will increase.

On the other hand, there is an insert molding method that eliminates gaps between members. However, since damage to the metal film due to high temperature, high pressure, or the like deteriorates millimeter wave transmission performance and appearance, or the like, a structure that requires heat treatment is required, and the laminated structure becomes complicated.

The present disclosure has been made in view of the above, and the object is to provide a laminated structure capable of reducing transmission attenuation of a millimeter wave and an object detection structure provided with the laminated structure.

Solution to Problem

The specific means to solve the above problems include the following aspects.

<1> A laminated structure comprising:

a first member,
a second member that faces the first member, and
a filling member that is disposed between the first member and the second member,
wherein a difference between a value of a relative permittivity of a member with a largest relative permittivity and a value of a relative permittivity of a member with a lowest relative permittivity among the first member, the second member and the filling member is 1.0 or less.

<2> The laminated structure according to <1>, wherein each of a relative permittivity of the first member and a relative permittivity of the second member is independently from 2.5 to 3.3.
<3> The laminated structure according to <1> or <2>, wherein each of the first member and the second member independently includes at least one resin selected from the group consisting of polycarbonate, an acrylonitrile-butadiene-styrene copolymer resin, an acrylic resin and an acrylonitrile-ethylene-propylene-diene-styrene copolymer resin.

<4> The laminated structure according to any one of <1> to <3>, wherein a relative permittivity of the filling member is from 2.5 to 3.3.

<5> The laminated structure according to any one of <1> to <4>, wherein a maximum thickness of the filling member is from 0.1 mm to 3.0 mm.

<6> The laminated structure according to any one of <1> to <5>, further comprising a silver particle layer that includes a silver particle between the first member and the second member.

<7> The laminated structure according to any one of <1> to <6>, used as an exterior member of a moving body.

<8> An object detection structure comprising:

the laminated structure according to any one of <1> to <7>, and
a millimeter wave radar that irradiates a millimeter wave toward the laminated structure.

Advantageous Effects of Invention

According to the present disclosure, a laminated structure capable of reducing transmission attenuation of a millimeter wave and an object detection structure provided with the laminated structure can be provided.

BRIEF DESCRIPTION OF DRAWINGS

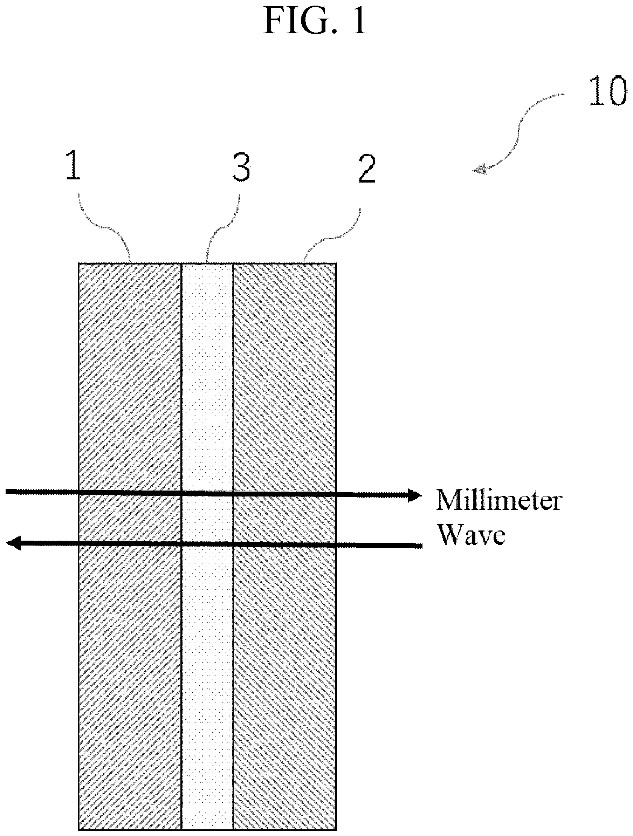

FIG. 1 is a schematic configuration view showing an example of the laminated structure of the present disclosure.

DESCRIPTION OF EMBODIMENTS

Embodiments for carrying out the invention will be described below in detail. However, the invention is not limited to the following embodiments. In the following embodiments, components (including elemental steps, etc.) thereof are not essential unless otherwise specified. The same applies to numerical values and ranges, which do not limit the invention.

In the present disclosure, a numerical range described using "to" indicates a range including the numerical values before and after "to" as a minimum value and a maximum value, respectively.

In numerical ranges described herein in a stepwise manner, an upper limit value or a lower limit value described in one numerical range may be replaced with an upper limit value or a lower limit value of another numerical range described in a stepwise manner. In addition, in a numerical range described herein, the upper limit value or the lower limit value of the numerical range may be replaced with a value described in the Examples section.

In the present disclosure, each component may contain multiple types of corresponding substances. When there are multiple types of substances corresponding to each component in the composition, the content ratio or content of each component is the total content ratio or content of the multiple types of substances present in the composition unless otherwise specified.

In the present disclosure, particles corresponding to each component may contain multiple types of particles.

In the present disclosure, the term "layer" or "film" refers to, when observing the region where the layer or film is present, not only the case where it is formed over the entire region, but also the case where it is formed only in part of the region.

In the present disclosure, the thickness of each layer refers to the arithmetic mean value obtained by preparing a test piece from the object to be measured using a microtome or the like and measuring the thickness at any five points with an electron microscope.

<Laminated Structure>

A laminated structure of the present disclosure includes a first member, a second member that faces the first member, and a filling member that is disposed between the first member and the second member, and a difference between a value of a relative permittivity of the member with the largest relative permittivity and a value of a relative permittivity of the member with the lowest relative permittivity among the first member, the second member and the filling member is 1.0 or less.

The laminated structure of the present disclosure can reduce transmission attenuation of a millimeter wave. The reason is assumed as below.

In the laminated structure in which a plurality of members are laminated, since reflection of a millimeter wave occurs at each boundary, the amount of transmission of the millimeter wave decreases and the transmission attenuation increases. In particular, when the difference in the relative permittivity of adjacent members is large, or when gas such as air exists in the gap between adjacent members and the difference in the relative permittivity between air and members is large, the transmission attenuation tends to increase.

It is assumed that in the laminated structure of the present disclosure, the filling member is disposed between the first member and the second member, and the difference between the maximum value and the minimum value of the relative permittivity in each member is set within the above-mentioned range, and therefore reflection of a millimeter wave at each boundary is reduced, respectively, and transmission attenuation of the millimeter wave can be reduced.

The laminated structure of the present disclosure is, for example, useful for reduction in transmission attenuation of a millimeter wave with frequency of from 20 GHz to 300 GHz.

The millimeter wave mentioned in this disclosure means a radio wave with the above frequency band.

In each of the above-mentioned member, a difference between a value of a relative permittivity of the member with the largest relative permittivity and a value of a relative permittivity of the member with the lowest relative permittivity is preferably 1.0 or less, more preferably 0.5 or less, and still more preferably 0.3 or less, from the viewpoint of more reducing transmission attenuation of a millimeter wave.

The lower limit of the above-mentioned difference is not particularly limited as long as it is 0 or more, and for example, may be 0.01 or more, or may be 0.1 or more.

Applications of the laminated structure of the present disclosure include, for example, the exterior members, and more specifically, include the exterior members of moving bodies. Examples of the moving bodies include automobiles such as four-wheeled vehicles and two-wheeled vehicles, trains, carts, ships, aircrafts, bicycles, carriages, trunks with casters, robots, drones, and electronic devices.

Examples of the exterior member include emblems, bumpers, and grilles.

Hereinafter, each member configuring the laminated structure of the present disclosure will be explained.

(First Member)

The laminated structure of the present disclosure include a first member. The first member is not particularly limited as long as a difference between a value of a relative permittivity of the member with the largest relative permittivity and a value of a relative permittivity of the member with the lowest relative permittivity among the first member, the below-mentioned second member and the below-mentioned filling member is 1.0 or less.

Examples of the material of the first member include inorganic materials such as glass and organic materials such as resins. Examples of resins include thermosetting resins and thermoplastic resins.

Examples of the thermoplastic resins include polyethylene, polypropylene, polycarbonate, polystyrene, polyvinyl chloride, vinyl-based polymers, polyesters, polyamides, acrylonitrile-butadiene-styrene copolymer resins (ABS resins), acrylic resins, acrylonitrile-ethylene-propylene-diene-styrene copolymer resins (AES resins), and thermoplastic elastomers. Among them, the thermoplastic resin is preferably at least one resin selected from the group consisting of polycarbonate, ABS resins, acrylic resins and AES resins.

The acrylic resin preferably contains a polymethyl methacrylate (PMMA) resin.

Examples of the thermosetting resins include silicone resins, urethane resins, melamine resins, epoxy resins, phenol resins, and urea resins.

When the laminated structure of the present disclosure is used for automobile parts such as emblems, the material of the first member is preferably polypropylene, polycarbonate, ABS resins, PMMA resins, AES resins or the like. Among resins, polypropylene has a light specific gravity, is easy to process, has high tensile strength, impact strength and compression strength, and is also excellent in weather resistance and heat resistance. Among plastic materials, ABS resin is relatively easy to apply surface treatment, and therefore, it is easy to apply coating or the like after molding. Among plastic materials, polycarbonate has high impact resistance, is excellent in weather resistance and heat resistance, and is also excellent in transparency. In addition, polycarbonate is easy to process, and is relatively light and a durable material among plastic materials.

(Second Member)

The laminated structure of the present disclosure include a second member that faces the first member. The second member is not particularly limited as long as a difference between a value of a relative permittivity of the member with the largest relative permittivity and a value of a relative permittivity of the member with the lowest relative permittivity among the above-mentioned first member, the second member and the below-mentioned filling member is 1.0 or less.

Preferred materials for the second member are the same as those for the first member described above.

In one embodiment of the laminated structure of the present disclosure, the first member and the second member each independently contain at least one resin selected from the group consisting of polycarbonate, ABS resins, acrylic resins and AES resins. Preferably, the first member contains polycarbonate, and the second member contains at least one of polycarbonate or AES resins.

Each of the relative permittivity of the first member and the relative permittivity of the second member may be independently from 2.5 to 3.3, may be from 2.5 to 2.9, or may be from 2.6 to 2.8.

It is preferable that each of the dielectric loss tangent of the first member and the dielectric loss tangent of the second member is independently 0.010 or less from the viewpoint that the laminated structure is easily permeable to radio waves such as millimeter waves. The lower limit of the dielectric loss tangent of these members is not particularly limited and for example, may be 0.001 or more, or may be 0.005 or more.

The thickness of the first member and the thickness of the second member can be designed appropriately depending on the application of the laminated structure. The shape of the first member and the shape of the second member are also not particularly limited.

When the laminated structure of the present disclosure is used as an exterior member, for example, it may be that the first member is external and the second member is internal.

(Filling Member)

The laminated structure of the present disclosure includes a filling member that is disposed between the first member and the second member. The filling member is not particularly limited as long as a difference between a value of a relative permittivity of the member with the largest relative permittivity and a value of a relative permittivity of the member with the lowest relative permittivity among the above-mentioned first member, the above-mentioned second member and the filling member is 1.0 or less.

In the present disclosure, the relative permittivity of each of the first member, the second member and the filling member refers to the value at 77 GHz.

The relative permittivity of the filling member may be from 2.0 to 3.3, may be from 2.2 to 3.2, or may be from 2.3 to 3.0.

The filling member may contain an adhesive that bonds the first member and the second member, or may contain a filler such as an inorganic filler, an additive, or the like.

The adhesive is selected without particular limitation within a range in which the relative permittivity of each of the first member, the second member, and the filling member satisfies the relationship described above. Examples of the adhesives include silicone-based adhesives, modified silicone-based adhesives, synthetic rubber-based adhesives, epoxy-based adhesives, polyester-based adhesives, acrylic resin-based adhesives, ethylene-vinyl acetate resin-based adhesives, and polyvinyl alcohol-based adhesives, polyamide-based adhesives, and urethane-based adhesives.

For example, when each of the first member and the second member independently includes at least one of polycarbonate or AES resins, the adhesive is preferably a modified silicone-based adhesive, a synthetic rubber-based adhesive, or an epoxy-based adhesives.

The dielectric loss tangent of the filling member is preferably 0.050 or less from the viewpoint that the laminated structure is easily permeable to radio waves such as millimeter waves. The lower limit of the dielectric loss tangent of the filling member is not particularly limited and for example, may be 0.001 or more, may be 0.005 or more, or may be 0.015 or more.

The maximum thickness of the filling member may be from 0.1 mm to 3.0 mm, or may be from 0.3 mm to 1.0 mm.

(Silver Particle Layer)

The laminated structure of the present disclosure may further include a design layer between the first member and the second member, or may further include a design layer at least one of between the first member and the filling member or the second member and the filling member.

The design layer may be a metal particle layer containing a metal particle, or may be a silver particle layer containing a silver particle. When the laminated structure of the present disclosure is used for an exterior member, and more specifically, used for an emblem, the laminated structure of the present disclosure may include the above-mentioned design layer.

The silver particle layer may be formed by a silver mirror reaction. Further, the silver particle included in the silver particle layer may include a silver particle precipitated by the silver mirror reaction (precipitated silver particle). Further, the silver particle layer may exhibit a sea-island structure in which the silver particles are scattered in islands.

The silver particle layer by the silver mirror reaction is formed by applying the two liquids of a water-soluble silver salt aqueous solution and a reducing agent aqueous solution containing a reducing agent and a strong alkaline component, on the surface of the first member, on the surface of the second member or on the surface of the undercoat layer described later (hereinafter, these surfaces may be collectively referred to as "silver mirror reaction treated surface") so as to be mixed. This causes an oxidation-reduction reaction to produce a silver particle, and the silver particle layer is formed.

The water-soluble silver salt aqueous solution used for forming the silver particle layer is obtained by dissolving a water-soluble silver salt such as silver nitrate, ammonia, and at least one amine compound selected from the group consisting of an amino alcohol compound, an amino acid, and an amino acid salt in water.

Specific examples of the amine compounds include aminoalcohol compounds such as monoethanolamine, diethanolamine, diisopropanolamine, triethanolamine and triisopropanolamine, amino acids and salts thereof such as glycine, alanine and sodium glycine.

The content ratio of the water-soluble silver salt such as silver nitrate included in the water-soluble silver salt aqueous solution, the content ratio of ammonia, and the content ratio of the amine compound are not particularly limited.

The water-soluble silver salt aqueous solution may contain a dispersant as necessary. Examples of the dispersant include DISPERBYK-102, DISPERBYK-190, DISPERBYK-2012 (BYK-Chemie Japan Co., Ltd.), and citric acid. Among these, DISPERBYK-102, DISPERBYK-190, DISPERBYK-2012 and the like are preferable.

The content ratio of the dispersant contained in the water-soluble silver salt aqueous solution as necessary is preferably from 0.05% by mass to 20% by mass, more preferably from 1% by mass to 10% by mass, and still more preferably from 1% by mass to 5% by mass.

The reducing agent aqueous solution used for forming the silver particle layer is obtained by dissolving a reducing agent and a strong alkaline component in water.

The specific examples of the reducing agent include hydrazine compounds such as hydrazine sulfate, hydrazine carbonate and hydrazine hydrate, sulfite compounds such as sodium sulfite, thiosulfate compounds such as sodium thiosulfate, and hydroquinone.

The specific examples of the strong alkaline component include sodium hydroxide and potassium hydroxide.

The reducing agent aqueous solution may contain the above-mentioned amine compound as necessary.

The reducing agent aqueous solution may contain a compound containing a formyl group, as necessary. The specific examples of compounds containing a formyl group include glucose and glyoxal.

The content ratio of the reducing agent contained in the reducing agent aqueous solution, and the content ratio of the strong alkaline component and the content ratio of the amine compound contained as necessary and the content ratio of the compound containing a formyl group contained as necessary are not particularly limited.

The reducing agent aqueous solution may be contain a dispersant as necessary. The dispersant that can be used in the reducing agent aqueous solution is the same as in the water-soluble silver salt aqueous solution.

The content ratio of the dispersant contained in the reducing agent aqueous solution as necessary is preferably from 0.05% by mass to 20% by mass, more preferably from 1% by mass to 10% by mass, and still more preferably from 1% by mass to 5% by mass.

Examples of the methods for applying the two liquids of the water-soluble silver salt aqueous solution and the reducing agent aqueous solution on the silver mirror reaction treated surface so as to be mixed, include a method in which two kinds of aqueous solutions are mixed in advance and this mixed solution is sprayed onto the silver mirror reaction treated surface using a spray gun or the like, and a method of spraying using a concentric spray gun having a structure in which two aqueous solutions are mixed in the head of the spray gun and immediately discharged, a method of spraying two kinds of aqueous solutions from two head spray gun having two spray nozzles, and a method of simultaneously spraying two kinds of aqueous solutions using two separate spray guns. These can be arbitrarily selected according to the situation.

When the silver particle layer is formed by the silver mirror reaction, a surface activation treatment may be performed to the silver mirror reaction treated surface before applying the two liquid of the water-soluble silver salt aqueous solution and the reducing agent aqueous solution. The surface activation treatment is a treatment in which a surface activation treatment liquid containing an inorganic tin compound is applied to the silver mirror reaction treated surface to attach stannous ions to the silver mirror reaction treated surface. After that, the silver particle layer can be formed by the silver mirror reaction on the silver mirror reaction treated surface on which the surface activation treatment has been performed.

Examples of the treatment methods of treating the silver mirror reaction treated surface with the surface activation treatment liquid containing the inorganic tin compound include a method of immersing the first member or the second member in the surface activation treatment liquid, and a method of applying the surface activation treatment liquid to the surface of the silver mirror reaction treated surface on which the silver particle layer is formed. As a method of applying the surface activation treatment liquid, spray application is suitable regardless of the shape of the first member or the second member. After the surface activation treatment, it is preferable to wash the surplus surface activation treatment liquid adhering to the silver mirror reaction treated surface with deionized water or purified distilled water.

The surface activation treatment liquid can be obtained by dissolving an inorganic tin compound such as tin (II) chloride, tin (II) oxide, or tin (II) sulfate, and as necessary, hydrogen chloride, hydrogen peroxide, polyhydric alcohol, or the like in water. The content ratios of these components contained in the surface activation treatment liquid are not particularly limited.

After treating the silver mirror reaction treated surface with the surface activation treatment liquid, and before forming the silver particle layer by the silver mirror reaction, an activation treatment by silver ions may be performed by using a treatment liquid containing a water-soluble silver salt such as silver nitrate. The content ratio of the water-soluble silver salt in the treatment liquid used in this activation treatment is not particularly limited.

The treatment liquid is brought into contact with the silver mirror reaction treated surface that has been treated with the surface activation treatment liquid. For the activation treatment, spray coating is suitable regardless of the shape of the first member or the second member.

After the silver particle layer is formed by the silver mirror reaction, a solution or the like remaining on the surface after the silver mirror reaction may be removed by washing the surface of the silver particle layer with deionized water, distilled water, or the like.

Furthermore, in order to reduce the reaction activity between silver in the silver particle layer and a residual ion such as a chloride ion or a sulfide ion, the silver particle layer may be performed with a deactivation treatment liquid that is an aqueous solution containing a strong alkaline component such as potassium hydroxide and a sulfite such as sodium sulfite. For the deactivation treatment, spray coating is suitable regardless of the shape of the first member or the second member.

After treating the silver particle layer with the deactivation treatment liquid, the residue of the deactivation treatment liquid remaining on the surface may be removed by washing the surface of the silver particle layer using deionized water, distilled water, or the like.

The content ratio of the strong alkaline component and the content ratio of the sulfite contained in the deactivation treatment liquid are not particularly limited.

The maximum thickness of the silver particle layer is not particularly limited and is preferably from about 30 nm to 200 nm.

When observing the cross section of the silver particle layer in the thickness direction, the ratio of the silver particles in the silver particle layer is preferably 70% or less, and more preferably from 60% to 65%. When the ratio of silver particles in the silver particle layer is 70% or less, the permeability of a millimeter wave radar tends to be further improved.

The ratio of silver particles in the silver particle layer is a value measured as shown below.

A transmission electron micrograph is taken at a magnification of 300,000 times for a cross-section through the thickness direction of the silver particle layer in the laminated structure. A center line passing through the center of the thickness direction of the silver particle layer is determined for the obtained electron micrograph. Next, the length of the portion where the central line and the silver particles overlap is determined. The percentage of the value obtained by dividing the length of the portion where the central line and the silver particles overlap by the length of the entire central line is defined as the ratio of the silver particles in the silver particle layer.

A surface resistivity of the silver particle layer is preferably $10^7$ $\Omega/\square$ or more, and more preferably $5 \times 10^7$ $\Omega/\square$ or more. As a result, a moderate gap is likely to be formed between the silver particles that constitute the silver particle layer, and the laminated structure of the present disclosure tends to have excellent millimeter wave permeability.

The upper limit of the surface resistivity of the silver particle layer is not particularly limited.

The surface resistivity of the silver particle layer is a value measured according to JIS K6911:2006.

Tin may be present between the silver particles contained in the silver particle layer and the first member or the second member. The presence of tin between the silver particles and the first member or the second member tends to improve the adhesion between the first member or the second member and the silver particles.

For example, tin existing between the silver particles and the first member or the second member is supplied onto the silver mirror reaction treated surface by the above-mentioned surface activation treatment.

-Undercoat layer-

From the viewpoint of improving adhesion between the first member or the second member and the silver particle layer, and the viewpoint of forming a smooth surface on the first member or the second member, the undercoat layer may be disposed between the first member or the second member and the silver particle layer.

For forming the undercoat layer, a fluorine resin paint, a polyester resin paint, an epoxy resin paint, a melamine resin paint, a silicone resin paint, an acrylic silicone resin paint, an acrylic urethane resin paint, or the like may be used and it is preferable to use the acrylic silicone resin paint, or the acrylic urethane resin paint. The acrylic silicone resin paint has excellent adhesion to the first member or the second member, high gloss retention and color retention, and excellent chemical resistance, oil resistance and water resistance. The acrylic urethane resin paint can form a soft coating film, and has excellent adhesion, and has also excellent durability, weather resistance and chemical resistance. These resin paints may be used singly or in combination of two or more.

The thickness of the undercoat layer is not particularly limited, and from the viewpoint of ensuring the smooth surface, is preferably from about 5 μm to 25 μm.

In order to enhance adhesion between the undercoat layer and the first member or the second member, a primer layer may be disposed between the undercoat layer and the first member or the second member

-Topcoat layer-

A topcoat layer may be disposed on the silver particle layer for the purpose of protecting the silver particle layer.
The topcoat layer is a layer disposed on an outermost surface of an ornament, and the topcoat layer makes it easier to protect the silver particle layer.
The topcoat layer preferably has transparency that does not hide the silver particle layer, and may be colorless clear (colorless transparent) or colored clear (colored transparent).
For forming the topcoat layer, the resin paint can be used, and the thermosetting resin can be used. Examples of the thermosetting resin include a fluorine resin paint, a polyester resin paint, an epoxy resin paint, a melamine resin paint, a silicone resin paint, an acrylic silicone resin paint, and an acrylic urethane resin paint, and it is preferable to use the acrylic silicone resin paint, or the acrylic urethane resin paint. The acrylic silicone resin paint has excellent adhesion to the first member or the second member, high gloss retention, color retention, chemical resistance, oil resistance and water resistance. The acrylic urethane resin paint can form a soft coating film, and has excellent adhesion, and has also excellent durability, weather resistance and chemical resistance. These resin paints may be used singly or in combination of two or more.
The thickness of the topcoat layer is not particularly limited, and preferably from about 20 $\mu$m to 40 $\mu$m. When the thickness of the topcoat layer is 20 $\mu$m or more, the silver particle layer can tend to be sufficiently protected, and when it is 40 $\mu$m or less, there is a tendency that cracks, peeling, poor adhesion, or the like due to aging is less likely to occur.
The laminated structure of the present disclosure may include a constitution other than the first member, the second member, the filling member or the design layer, and for example, another member may be disposed at least one of the outside of the first member or the outside of the second member.
An example of the laminated structure of the present disclosure will be described with reference to FIG. 1. As shown in FIG. 1, a laminated structure 10 includes a first member 1, a second member 2 and a filler member 3 disposed between the first member 1 and the second member 2. Further, a millimeter wave passes through the laminated structure 10 as indicated by the arrows in FIG. 1.

<Object Detection Structure>

An object detection structure of the present disclosure includes the aforementioned laminated structure of the present disclosure, and a millimeter wave radar that irradiates a millimeter wave toward the laminated structure. Since the laminated structure of the present disclosure can reduce transmission attenuation of the millimeter wave, it is excellent in transmission and reception performance of the millimeter wave radar.
Further, the laminated structure of the present disclosure may be combined with a radar that transmit and receive a radio wave other than a millimeter wave.

EXAMPLE

Hereinafter, Examples of the present disclosure will be explained, but the present disclosure is not limited to the following Examples.

<Example 1>

(Preparation of First Member)

A planar polycarbonate substrate with a thickness of 2 mm (relative permittivity at 77 GHz of 2.7, and dielectric loss tangent of 0.008) was prepared as a first member.

(Preparation of Second member)

A planar polycarbonate substrate with a thickness of 2 mm (relative permittivity at 77 GHz of 2.7, and dielectric loss tangent of 0.008) was prepared as a second member.

(Production of Laminated Structure)

As a filling member, Cemedine Super X2 (Cemedine Co., Ltd., component: 95% by mass of modified silicone and 5% by mass of synthetic resin, relative permittivity at 77 GHz of 2.45, and dielectric loss tangent of 0.049), which is a modified silicone-based adhesive, was used, and the first member, the planar filler member and the second member were laminated in this order to produce the laminated structure.

The thickness of the filling member in the laminated structure was 0.5 mm.

$\Delta\varepsilon$, which is a difference between a value of a relative permittivity of the member with the largest relative permittivity and a value of a relative permittivity of the member with the lowest relative permittivity among the first member, the second member and the filling member is shown in Table 1.

<Example 2>

A laminate structure was produced in the same manner as in Example 1 except that the filling material was changed from Cemedine Super X2 to TB1521B (ThreeBond Co., Ltd., main component: chloroprene synthetic rubber, relative permittivity at 77 GHz of 2.74, and dielectric loss tangent of 0.024), which is a synthetic rubber-based adhesive in Example 1.

<Example 3>

A laminate structure was produced in the same manner as in Example 1 except that the filling material was changed from Cemedine Super X2 to Quickmix (Henkel Japan Co., Ltd., main agent: epoxy resin (100% by mass), curing agent: polymercaptan (85% by mass or more) and modified amine, relative permittivity at 77 GHz of 2.92, dielectric loss tangent of 0.035), which is an epoxy-based adhesive in Example 1.

<Comparative Example 1>

A first member and a second member were prepared in the same manner as in Example 1, and a spacer (thickness 0.5 mm) was disposed between the first member and the second member to produce the laminated structure of Comparative Example 1. In the laminated structure of Comparative Example 1, there is a gap between the first member and the second member, and air (relative permittivity of 1.0) is present in this gap.

[Evaluation]

-Measurement of Millimeter Wave Transmission Attenuation -

A transmission attenuation, which is an attenuation amount when a millimeter wave (77 GHz) was transmitted through the laminated structure obtained in each of Examples and Comparative Example 1, was measured by the following method.

The transmission attenuation was calculated from the transmission coefficient obtained by the free-space method in which the laminated structure is placed between a transmitting antenna and a receiving antenna and a radio wave is vertically irradiated to the first member side of the laminated structure, which is defined by JIS R1679:2007 (method for measuring radio wave absorption characteristics in the millimeter wave band of radio wave absorber).

Herein, the transmission attenuation can be calculated from the following equation using the transmission coefficient.

$$\text{Transmission attenuation} = 20\log10\ (\text{transmission coefficient})$$

The results are shown in Table 1.

[Table 1]

|  | Filling member | $\Delta\varepsilon$ | Transmission attenuation (dB) |
|---|---|---|---|
| Example 1 | Modified silicone-based adhesive | 0.25 | -1.214 |
| Example 2 | Synthetic rubber-based adhesive | 0.04 | -1.039 |
| Example 3 | Epoxy-based adhesive | 0.22 | -1.179 |

(continued)

|  | Filling member | Δε | Transmission attenuation (dB) |
|---|---|---|---|
| Comparative Example 1 | None (Air) | 1.7 | -3.132 |

As shown in Table 1, in the laminated structure of Examples 1 to 3, the attenuation of the millimeter wave was reduced compared to the laminated structure of Comparative Example 1.

The disclosure of Japanese Patent Application No. 2020-150094, filed on September 7, 2020 is incorporated herein by reference in their entirety.

All the documents, patent applications and technical standards that are described in the present specification are hereby incorporated by reference to the same extent as if each individual document, patent application or technical standard is concretely and individually described to be incorporated by reference.

**Claims**

1.  A laminated structure comprising:

   a first member,
   a second member that faces the first member, and
   a filling member that is disposed between the first member and the second member,
   wherein a difference between a value of a relative permittivity of a member with a largest relative permittivity and a value of a relative permittivity of a member with a lowest relative permittivity among the first member, the second member and the filling member is 1.0 or less.

2.  The laminated structure according to claim 1, wherein each of a relative permittivity of the first member and a relative permittivity of the second member is independently from 2.5 to 3.3.

3.  The laminated structure according to claim 1 or 2, wherein each of the first member and the second member independently includes at least one resin selected from the group consisting of polycarbonate, an acrylonitrile-butadiene-styrene copolymer resin, an acrylic resin and an acrylonitrile-ethylene-propylene-diene-styrene copolymer resin.

4.  The laminated structure according to any one of claims 1 to 3, wherein a relative permittivity of the filling member is from 2.5 to 3.3.

5.  The laminated structure according to any one of claims 1 to 4, wherein a maximum thickness of the filling member is from 0.1 mm to 3.0 mm.

6.  The laminated structure according to any one of claims 1 to 5, further comprising a silver particle layer that includes a silver particle between the first member and the second member.

7.  The laminated structure according to any one of claims 1 to 6, used as an exterior member of a moving body.

8.  An object detection structure comprising:

   the laminated structure according to any one of claims 1 to 7, and
   a millimeter wave radar that irradiates a millimeter wave toward the laminated structure.

# FIG. 1

Millimeter Wave

# EP 4 205 962 A1

| INTERNATIONAL SEARCH REPORT | International application No. |
|---|---|
| | PCT/JP2021/022877 |

**A. CLASSIFICATION OF SUBJECT MATTER**
Int.Cl. B32B7/025(2019.01)i
FI: B32B7/025

According to International Patent Classification (IPC) or to both national classification and IPC

**B. FIELDS SEARCHED**

Minimum documentation searched (classification system followed by classification symbols)
Int.Cl. B32B7/025

Documentation searched other than minimum documentation to the extent that such documents are included in the fields searched
Published examined utility model applications of Japan    1922-1996
Published unexamined utility model applications of Japan    1971-2021
Registered utility model specifications of Japan    1996-2021
Published registered utility model applications of Japan    1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2002-135030 A (HONDA MOTOR CO., LTD.) 10 May 2002 (2002-05-10), claims, paragraphs [0001], [0007]-[0011], [0025]-[0029], [0041], [0042], drawings | 1-5, 7, 8<br>6 |
| Y | WO 2018/179579 A1 (TOYODA GOSEI CO., LTD.) 04 October 2018 (2018-10-04), claims, paragraph [0017] | 6 |
| Y | JP 2020-55308 A (SUMITOMO RIKO COMPANY LIMITED) 09 April 2020 (2020-04-09), claims, paragraphs [0002], [0024] | 6 |
| A | JP 2001-315285 A (TEIJIN LTD.) 13 November 2001 (2001-11-13), entire text | 1-8 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 July 2021 | 13 July 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

13

INTERNATIONAL SEARCH REPORT
Information on patent family members

| International application No. |
|---|
| PCT/JP2021/022877 |

| | | |
|---|---|---|
| JP 2002-135030 A | 10 May 2002 | (Family: none) |
| WO 2018/179579 A1 | 04 October 2018 | US 2020/0157685 A1 claims, paragraph [0024] |
| JP 2020-55308 A | 09 April 2020 | (Family: none) |
| JP 2001-315285 A | 13 November 2001 | (Family: none) |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003019765 A
- JP 2020150094 A